# FASCICULE DE BREVET EUROPEEN

(11) **EP 0 728 711 B1**
(45) Date de publication et mention de la délivrance du brevet: **29.03.2000**
(21) Numéro de dépôt: 96400323.0
(22) Date de dépôt: 16.02.1996
(51) Int. Cl.: C03C 17/00, C03C 17/06, H05B 3/26

(54) **Vitrage pour véhicule automobile**
Verglasung für Kraftfahrzeug
Glazing for automotive vehicle

(30) Priorité: 21.02.1995 FR 9501964
(43) Date de publication de la demande: 28.08.1996
(73) Titulaire: SAINT-GOBAIN VITRAGE, 92400 Courbevoie (FR)
(72) Inventeur: Morin, Claude, F-92800 Puteaux (FR); Beyrle, André, F-60170 Tracy-le-Val (FR)
(74) Mandataire: Muller, René

(56) Documents cités:
- EP-A- 0 193 464
- EP-A- 0 396 449
- EP-A- 0 574 625
- DE-A- 3 708 577
- GB-A- 2 091 528
- PATENT ABSTRACTS OF JAPAN vol. 016, no. 219 (C-0943), 22 Mai 1992 & JP-A-04 042835 (MICHIO ARAI), 13 Février 1992,

## Description

L'invention concerne un nouveau vitrage pour véhicule automobile, pouvant être utilisé en tant que lunette arrière ou vitrage latéral, procurant à la fois un confort accru pour les occupants du véhicule, une plus grande sécurité, et en outre un aspect nouveau.

La surface vitrée des véhicules automobiles à tendance à augmenter de plus en plus sur les nouveaux modèles. Cette augmentation de la surface pose plusieurs problèmes.

Un des problèmes posés est le réchauffement accru de l'habitacle du véhicule dû à l'effet de serre en cas de fort ensoleillement. Un autre problème est l'élimination de la buée et/ou du givre sur ces surfaces.

Pour réduire l'effet de serre, on a déjà proposé par exemple d'utiliser en tant que vitrage automobile, un vitrage comprenant au moins une feuille de verre teintée présentant une fonctionnalité anti-solaire.

Par fonctionnalité anti-solaire, on entend ici un rapport entre le facteur de transmission lumineuse TL_{A} et le facteur de transmission énergétique TE tel que le rapport TL_{A}/TE soit supérieur à 1. Le verre teinté proposé peut être un verre dont les formulations sont décrites par exemple dans la publication de brevet EP-A-0 353 140.

Ce verre contient des oxydes de fer dans des proportions de 0,55 à 0,95 % en poids de Fe₂O₃ total et de 0,11 à 0,22 % en poids de FeO conduisant à un rapport FeO/Fe₂O₃ total de 0,19 à 0,35.

Il présente un facteur de transmission lumineuse TL_{A} supérieur à 70 % et un rapport TL_{A}/TE supérieur à 1,3.

Une autre composition de verre teinté ayant une fonctionnalité anti-solaire comprend en pourcentages pondéraux de 0,75 à 1,4 % de fer total exprimé sous la forme de Fe₂O₃, de 0,25 à 0,32 % de fer ferreux sous la forme de FeO. Ce verre présente sous une épaisseur comprise entre environ 3 et 3,3 millimètres, un facteur de transmission lumineuse TL_{A} au moins égal à 70 %, et un facteur de transmission énergétique globale TE inférieur à environ 46 %.

Le verre teinté peut aussi être un verre à plus faible transmission lumineuse TL_{A} dont des formulations sont décrites par exemple dans le document EP-A-0 536 046. Ce verre comprend en tant qu'agents colorants de 0,45 à 2,5 % de Fe₂O₃ exprimé en fer total, de 0,001 à 0,02 % de CoO, de O à 0,0025 % de Se et de 0 à 0,1 % de Cr₂O₃. Ce verre présente pour une épaisseur de 3,85 mm un facteur de transmission lumineuse TL_{A} compris entre 20 et 60 % et un facteur énergétique globale TE compris entre 10 et 48 %, le rapport TL_{A}/TE étant supérieur à 1.

Les propositions décrites ci-dessus si elles donnent satisfaction en terme de réduction du facteur de transmission énergétique peuvent néanmoins nécessiter des formulations de verre sensiblement plus coûteuse ou peuvent être plus difficiles à mettre en oeuvre (fusion plus difficile), qu'un verre silico-sodo-calcique usuel.

Pour résoudre le problème de l'élimination de la buée et/ou du givre sur un vitrage automobile, on a déjà proposé d'équiper le vitrage d'un réseau chauffant. Ce réseau chauffant, comme celui décrit par exemple dans la publication de brevet FR-A-1 464 585, est constitué d'étroites bandes de résistance à base d'une composition électriquement conductrice, disposées parallèlement les unes par rapport aux autres, avec un écartement de l'ordre de 2 à 3 cm environ, s'étendant entre deux bandes collectrices. Les bandes de résistance et les bandes collectrices sont généralement déposées directement sur le substrat en verre par un procédé de sérigraphie, et cuites lors du traitement thermique précédant le bombage et la trempe du vitrage. La composition électro-conductrice est faite d'une suspension pâteuse dans un liant, d'une composition d'argent métallique et d'une fritte de verre. Les bandes de résistance formant le réseau dans le champ de vision du vitrage sont relativement fines, leur largeur étant généralement comprise entre 0,2 et 0,8 mm, pour ne pas gêner la visibilité à travers le vitrage.

On connaît aussi de la publication du brevet FR-A-2 497 731 un vitrage chauffant dans lequel le réseau chauffant se présente sous la forme d'un réseau maillé, les ouvertures des mailles conductrices ayant une dimension maximale de 10 mm et de préférence de 2 à 6 mm, et les lignes individuelles formant les mailles ayant une largeur inférieure ou égale à 0,5 mm et de préférence inférieure à 0,3 mm pour ne pas gêner la vision. Les mailles conductrices sont déposées de manière à couvrir moins de 20 % de la surface du panneau sur laquelle s'étend le réseau maillé. La matière conductrice préférée est choisie parmi le groupe aluminium, nickel et cuivre.

S'ils permettent d'éliminer la buée et le givre de manière satisfaisante, les réseaux chauffants décrits ci-dessus ne procurent pas de solution à la réduction de l'effet de serre dans le véhicule automobile.

D'autres vitrages sont également connus pour atténuer le rayonnement thermique. Par exemple, la demande de brevet EP-A-0 396 449 décrit un vitrage pourvu, en particulier dans la région supérieure du vitrage, d'au moins une bande filtrante atténuant le rayonnement thermique et faite d'un revêtement transparent en un émail à cuire contenant au moins un métal noble en dispersion colloïdale. La demande de brevet DE-A-3708577 décrit quant à elle un vitrage pourvu d'une couche conductrice, par exemple une couche métallique, présentant une résistance superficielle inférieure à 2 ohms/carré et une transmission lumineuse inférieure à 20 %, cette couche présentant des interruptions régulières dans une zone de façon à former un quadrillage permettant de faire passer la transmission lumineuse à au moins 40 % dans cette zone.

L'invention propose un nouveau vitrage, pour véhicule de transport, pouvant être utilisé en tant que lunette arrière ou vitrage latéral de véhicule automobile, et qui apporte une solution aux différents problèmes évoqués précédemment, en procurant à la fois un confort accru pour les occupants du véhicule, une sécurité améliorée, et en outre un aspect nouveau.

Le vitrage selon l'invention comprend une feuille de verre revêtue sur sa face destinée à être orientée vers l'habitacle d'un réseau à base d'une composition de type émail, opaque ou essentiellement opaque, de faible émissivité et/ou conductrice de l'électricité, s'étendant sur essentiellement toute la surface de la feuille de verre correspondant au champ de vision, avec un taux de recouvrement par la composition compris entre 20 et 90 % et de préférence entre 25 et 80 % de la surface sur laquelle s'étend le réseau.

Par faible émissivité, on entend selon l'invention une couche dont l'émissivité est inférieure à celle d'une feuille de verre nue.

Par composition de type émail, on entend selon l'invention une composition à base d'une pâte pouvant être déposée notamment par sérigraphie sur la feuille de verre et pouvant être cuite notamment au cours du traitement thermique précédent le bombage-trempe de la feuille de verre. Cette composition peut contenir des oxydes métalliques et/ou des métaux et le cas échéant une fritte de verre.

Selon l'invention le réseau qui présente au moins un motif de répétition s'étend sur essentiellement toute la surface de la feuille de verre correspondant au champ de vision. Cela signifie que le réseau peut s'étendre sur au moins 90 % de la surface de la feuille de verre correspondant au champ de vision, c'est-à-dire de la surface de la feuille de verre non déjà couverte par une bande périphérique par exemple. De préférence, le réseau s'étend sur toute la surface correspondant au champ de vision.

Par essentiellement opaque, on entend une couche de la composition d'émail pour laquelle le facteur de transmission lumineuse TL_{A} est inférieur à 5 % environ pour l'épaisseur déposée. Cette épaisseur déposée peut varier par exemple de 1 à 20 µm à l'état cuit et avantageusement entre 3 et 10 µm.

Selon une réalisation de l'invention, le revêtement formant le réseau de type émaillé est à base d'une composition comprenant au moins un composant procurant une couche de faible émissivité. Un tel composant peut être choisi parmi des oxydes métalliques tels que les oxydes de fer, chrome, cobalt, titane, aluminium, étain, cuivre, ruthénium et indium ou parmi des métaux tels que l'argent, l'or, le platine, l'aluminium ou parmi des mélanges de ces métaux et/ou oxydes, l'émissivité du (ou des) composant(s) choisi(s) étant inférieure à celle du verre, c'est-à-dire inférieure à 0,837 et de préférence inférieure à 0,6. On rappelle qu'une émissivité de 1 correspond à l'émissivité du corps noir idéal.

Sous un des aspects de l'invention, la composition formant le réseau de type émail comprend au moins un métal conducteur de l'électricité. Ce métal est de préférence de l'argent, de sorte que la composition présente à la fois des propriétés de conducteur de courant électrique et des propriétés de faible émissivité.

Ainsi, en incorporant un métal tel que l'argent dans la composition destinée à former le réseau, on peut transformer ce réseau en un réseau chauffant couvrant essentiellement toute la surface correspondant au champ de vision. A cette fin, on associe deux bandes collectrices d'alimentation électrique au réseau émaillé conducteur qui présente alors une continuité de matière dans le motif pour assurer le passage du courant électrique entre les deux bandes collectrices.

Le réseau conducteur peut présenter un motif (ou plusieurs) très variable et être formé par exemple d'un ensemble de lignes ou de bandes entrecroisées formant une sorte de grillage ou treillis, ou ce peut être aussi un motif à trous, sachant que dans tous les cas de figures, la surface couverte par la matière constituant le réseau est comprise entre 20 et 90 % de la surface de la feuille de verre couverte par le réseau, et de préférence entre 25 et 80 %. Lorsqu'il s'agit d'un motif à trous, ceux-ci peuvent être circulaires, carrés, rectangulaires, en forme de losange ou en une autre forme géométrique telle une forme oblongue ou de type elliptique.

Le nombre de trous et leurs dimensions peuvent être déterminés selon le taux de recouvrement désiré pour le réseau. De préférence la largeur moyenne des espaces couverts par la composition formant le motif, par exemple ici les espaces couverts entre trous voisins, reste supérieure à 0,5mm environ, notamment pour assurer la fiabilité du réseau chauffant.

Etant donné l'importance du recouvrement de la surface de verre par la composition formant le réseau conducteur, celle-ci peut être formée à partir de métaux de résistivités très variables selon la concentration de la composition en ce métal ou en ces métaux et aussi de l'épaisseur du conducteur déposé sur la surface du verre, sachant que la résistance globale recherchée pour le circuit chauffant est par exemple comprise entre 0,5 et 1 ohm pour une lunette arrière chauffante d'un véhicule automobile.

On adapte donc la composition formant le réseau conducteur à la surface couverte par la composition. Cette adaptation peut se faire par le choix du ou des composants conducteur et de sa (de leur) concentration dans la composition. Si l'on désire augmenter la résistance électrique de la composition, on peut par exemple introduire dans cette composition des métaux et/ou des oxydes métalliques peu conducteurs sous forme de pâte ou de poudre, et/ou ajouter une fritte de verre dans des proportions plus ou moins importante.

Selon une caractéristique de l'invention, on choisi une composition contenant une pâte d'argent métallique, dans des proportions procurant la résistance électrique désirée, et de manière à obtenir avantageusement un caractère faiblement émissif pour le vitrage muni du réseau. Les pâtes d'argent présentent des résistivités qui peuvent bien entendu varier selon leur concentration en argent. Des pâtes d'argent peuvent être utilisées seules si leurs résistivités sont adaptées, ou pour celles présentant de trop faibles résistivités, en étant mélangées à au moins une pâte d'un métal à plus forte résistivité tel que du zinc, du nickel, du cuivre, etc..., et/ou par d'autres moyens comme évoqué précédemment, par exemple par addition d'oxyde(s) métallique(s) et/ou d'une fritte de verre et/ou de pigments, en plus ou moins grandes quantités.

Pour réaliser le vitrage selon l'invention, on forme le réseau à base de la composition de type émail par sérigraphie. Lorsque le réseau doit constituer un réseau chauffant, celui-ci peut être déposé en même temps que les deux bandes collectrices si celles-ci comprennent au moins une couche de cette même composition de type émail. Après que le réseau ait été déposé sur le vitrage, celui-ci subit le traitement thermique précédant le bombage et la trempe.

Au cours de ce traitement thermique s'opère la cuisson de la composition formant le réseau.

Lorsque le réseau est réalisé à partir d'une composition à résistivité moyenne plus élevée que celle usuellement utilisée pour un réseau chauffant connu à bandes fines à base d'une pâte d'argent, il peut être avantageux de déposer une deuxième couche d'une composition à résistivité plus faible sur les bandes collectrices, notamment pour réduire l'échauffement au niveau des bandes collectrices et/ou pour améliorer la soudure des cosses pour l'alimentation électrique.

En variante les bandes collectrices peuvent faire l'objet d'un dépôt séparé à partir d'une pâte conductrice adaptée.

Lorsque le vitrage présente une bande périphérique émaillée, ce qui est généralement le cas notamment lorsque le vitrage est monté par collage dans la baie de carrosserie, le dépôt du réseau recouvrant le champ de vision du vitrage selon l'invention s'opère après le dépôt de cette bande périphérique.

La cuisson des dépôts s'effectue alors simultanément, au cours du traitement thermique de bombage trempe.

Selon une caractéristique de l'invention, le réseau chauffant formé par le réseau selon l'invention peut être modulé afin de privilégier certaines zones de chauffage. Cette modulation peut être obtenue en jouant sur le pourcentage de la surface couverte par la matière formant le réseau qui est alors un réseau variable, par rapport à la surface totale du vitrage, et/ou sur une épaisseur variable du réseau selon l'emplacement.

Le réseau selon l'invention peut être formé à partir d'un motif à répétition régulier et continu sur toute la surface du vitrage. En variante, il peut présenter un motif à répétition, variable, selon les zones désirées. Le réseau peut encore être un réseau multiple, c'est-à-dire formé de plusieurs réseaux séparés les uns des autres par des bandes de verre nues, c'est-à-dire non recouvertes par le motif, ces bandes de verre nues étant toutefois étroites. En particulier, lorsque le réseau est un réseau chauffant, il peut être formé de deux ou plusieurs parties (ou réseaux) séparés les uns des autres par des bandes de verre nues qui s'étendent entre les deux bandes collectrices.

Pour améliorer le caractère anti-solaire du vitrage et par là le confort, le substrat en verre est avantageusement formé à partir d'un verre teinté pour lequel le rapport TL_{A}/TE est supérieur à 1, tel que ceux cités précédemment.

Le vitrage selon l'invention peut être utilisé avec avantage en tant que lunette arrière chauffante et/ou en tant que vitrage latéral, en particulier vitrage latéral arrière du véhicule automobile. Outre le confort dû à un faible facteur solaire et au bon rapport TL_{A}/TE, il peut procurer un effet d'occultation ou « privacy ».

On rappelle que le facteur solaire est la somme du facteur TE et de l'énergie absorbée par le vitrage et réémise vers l'intérieur du véhicule.

Le vitrage selon l'invention peut présenter une structure monolithique en étant formé que de la seule feuille de verre revêtue par le réseau imprimé. Il peut aussi présenter une structure feuilletée, à plusieurs couches ou feuilles de verre et/ou de matière plastique. Ainsi la feuille de verre revêtue par le réseau imprimé peut être associée à une autre feuille de verre, à l'aide d'une couche intercalaire par exemple en polyvinylbutyral. Elle peut aussi être associée à une ou plusieurs couches de matière plastique pour former un vitrage asymétrique verre/plastique. Ainsi par exemple la feuille de verre imprimée peut être revêtue d'une ou plusieurs couches ou feuilles présentant une ou plusieurs des propriétés telles que des propriétés de surface comme de résistance à la rayure et à l'abrasion, des propriétés d'antilacération, des propriétés d'absorbeur d'énergie, etc... Des vitrages asymétriques convenables peuvent utiliser par exemple des couches de polyuréthane telle que celles décrites notamment dans les publications de brevets FR-A-2 480 669, FR-A-2 546 810, FR-A-2 398 606, EP-A-0 132 198, EP-A-0 389 354, EP-A-0 190 517 ou encore JP-A-86 177 241 et JP-A-86 281 118 desquelles l'homme de métier pourra tirer l'enseignement nécessaire.

Dans cette structure asymétrique, le vitrage selon l'invention dispose la ou les couches de matière plastique sur la face de la feuille de verre revêtue par le réseau imprimé.

La feuille de verre imprimée peut aussi être associée à une autre feuille de verre de laquelle elle est séparée par un espaceur convenable pour former un vitrage double.

D'autres avantages et caractéristiques de l'invention apparaitront dans la suite de la description faite en référence aux figures.

La figure 1 représente un véhicule automobile équipé de vitrages à réseau selon l'invention pour la lunette arrière et les latéraux arrières.

La figure 2 représente une lunette arrière selon l'invention.

La figure 3 représente un détail du réseau imprimé sur la lunette arrière selon la figure 2.

La figure 4 représente une variante d'un réseau imprimé pour une lunette arrière selon l'invention.

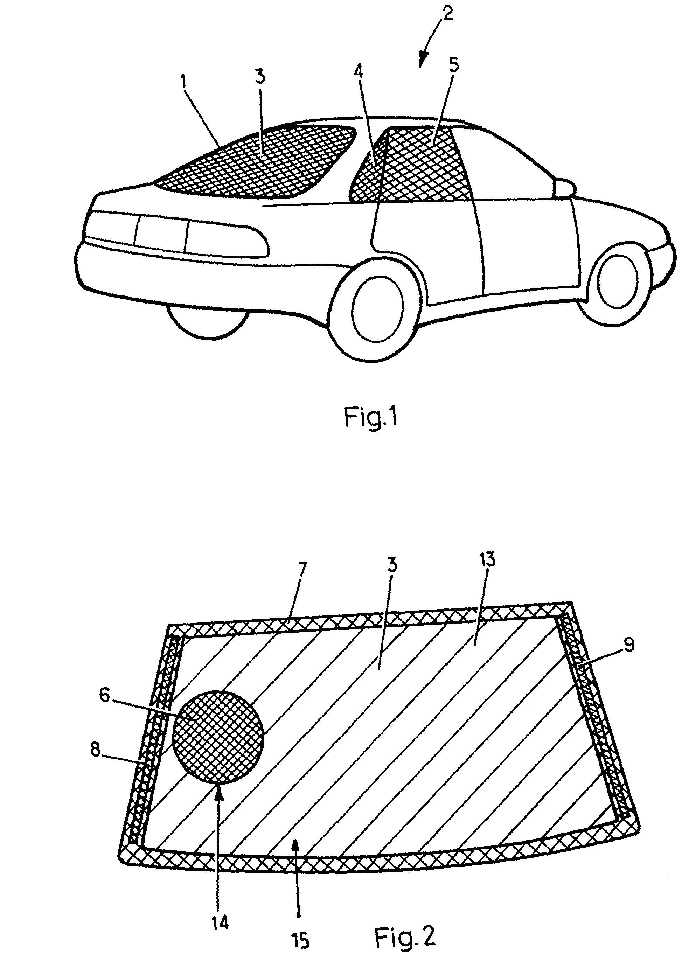

Le vitrage 1 selon l'invention tel que représenté sur la figure 1, en étant monté sur un véhicule automobile 2 peut être utilisé en tant que lunette arrière 3 chauffante ou en tant que vitrage latéral arrière (vitre de custode 4 ou vitre de portière arrière 5). Il est pourvu d' un réseau de type émail recouvrant le champ de vision, déposé sur la face intérieure de la feuille de verre, et présentant des propriétés anti-solaires et/ou conductrices de l'électricité. Le vitrage présente un facteur de transmission lumineuse TL_{A} pouvant varier selon l'application du vitrage soit en tant que lunette arrière, soit en tant que vitrage latéral, le TL_{A} étant alors généralement plus faible pour la lunette arrière que pour le vitrage latéral.

Dans l'application en tant que lunette arrière chauffante telle que représentée sur la figure 2, le vitrage 3 selon l'invention peut être pourvu d'un réseau de type émail 6 à base d'une composition conductrice de l'électricité, s'étendant sur essentiellement toute la surface du champ de vision 13 de la lunette arrière formée d'une feuille de verre 15, c'est-à-dire jusqu'à la bande périphérique émaillée 7 et jusqu'aux deux bandes collectrices 8, 9. Seule une partie 14 du motif est représentée.

Le réseau utilise un motif à répétition, continu, à trous, le taux de couverture par la matière formant le motif est de 68 % environ.

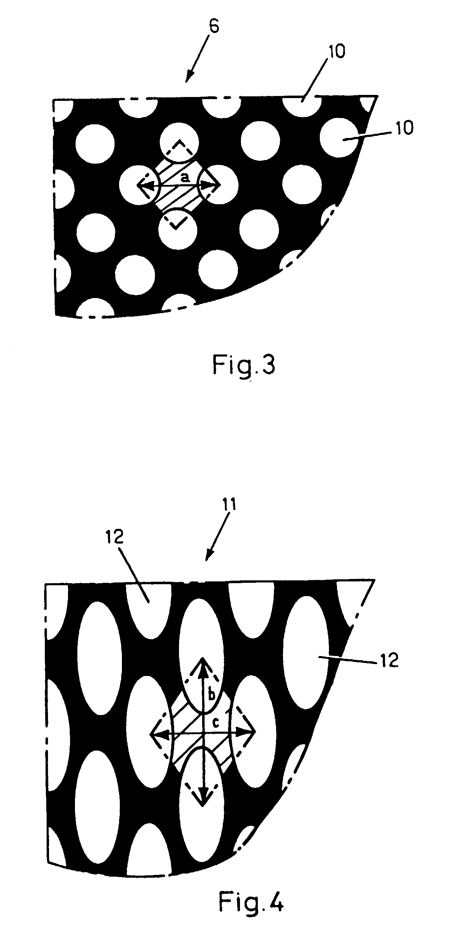

La figure 3 représente plus en détail le motif recouvrant le vitrage de la figure 2.

Le motif 6 est un motif de répétition à trous. Ces trous 10 d'un diamètre de 0,9 mm environ sont disposés suivant des lignes parallèles, les centres de quatre trous voisins étant placés aux quatre sommets d'un carré dont les diagonales mesurent 2 mm environ. On atteint par ce motif un taux de couverture calculé de 68 % de la surface sur laquelle s'étend le réseau.

Pour fabriquer la lunette arrière chauffante, on opère de la manière suivante.

Après découpe et façonnage du verre, on dépose sur la face de la feuille de verre destinée à être orientée vers l'habitacle, une pâte d'émail noir apte à former la bande périphérique. Le facteur TL_{A} de la feuille de verre, qui a une épaisseur d'environ 4 mm, est de 71 % environ et le facteur TE de 0,44 environ.

La pâte d'émail noir présente des propriétés anti-adhésive («anti-stick ») avec l'outillage de formage de la feuille de verre, et une opacité à l'argent. Cette pâte d'émail est formée à partir d'une fritte de verre à base de borosilicate de plomb, de pigments et de fer métal.

Le dépôt de cette pâte d'émail noir s'effectue par impression à l'aide d'un écran de sérigraphie.

Après séchage de ce premier dépôt, on dépose à nouveau par sérigraphie une pâte conductrice de type émail destinée à former le réseau conducteur de l'électricité, s'étendant sur toute la surface de la feuille de verre jusqu'à la bande périphérique, le réseau chevauchant ladite bande périphérique.

La pâte conductrice de type émail utilisée comprend un mélange d'une pâte d'argent à 55 % en poids d'argent et d'une pâte de zinc à 67,5 % en poids de zinc. On utilise 83 parties de pâte d'argent pour 17 parties de pâte de zinc. La pâte conductrice comprend en outre 12 parties d'une fritte de verre à base de borosilicate de plomb. La résistivité de la pâte conductrice est de 100 µ Ω.cm environ (résistivité mesurée après cuisson), l'objectif étant l'obtention d'un réseau chauffant d'environ 200 watts de puissance sous une tension électrique de 13 volts environ.

Après dépôt du réseau conducteur, on procède à un troisième dépôt par sérigraphie d'une pâte à l'argent à 75 % en poids destinée à former les deux bandes collectrices qui viennent au contact du réseau émaillé conducteur. La pâte plus conductrice permet de réduire la résistance des bandes collectrices et autorise la soudure des cosses (non représentées) pour l'alimentation électrique.

Le vitrage revêtu du réseau chauffant subit ensuite un traitement thermique pour le séchage et un traitement thermique de cuisson qui correspond au traitement précédant le bombage et la trempe du vitrage.

Après cuisson, le réseau conducteur présente une épaisseur d'environ 5 µm.

La lunette arrière chauffante finalement obtenue présente un facteur TL_{A} de 19 % et un facteur TE de 11 %.

Le facteur solaire du vitrage est de 29 %. Cette valeur est à comparée avec celle obtenue pour un vitrage semblable utilisant un même motif mais à base d'une composition d'émail noir connu de type bande périphérique. Dans ce cas le facteur solaire est de 32,5 %. Le vitrage selon l'invention présente une réduction de plus de 10 % du facteur solaire. En terme de confort cette diminution est très significative.

En terme de chauffage, le réseau donne entière satisfaction en étant au moins aussi efficace qu'un réseau à étroites bandes de résistance.

La figure 4 représente une variante d'un réseau imprimé pour une lunette arrière selon l'invention.

Le réseau 11 utilise ici un motif de répétition à trous 12 de forme elliptique. Le grand axe de l'ellipse qui mesure environ 2,8 mm est disposé dans la direction de la hauteur de la lunette arrière, le petit axe mesure 1,1 mm environ.

Les centres de 4 trous voisins sont placés au sommet d'un losange dont la diagonale b mesure 3,5 mm selon la hauteur et la diagonale c 2,5 mm selon la largeur.

On atteint par ce motif un taux de couverture calculé de 33,5 % de la surface sur laquelle s'étend le réseau.

Pour fabriquer la lunette arrière qui utilise ce motif on opère comme décrit précédemment sauf qu'on utilise pour former le réseau une pâte conductrice qui est un mélange à raison de 84 parties de pâte d'argent à 55 % en poids d'argent et 16 parties de pâte de zinc à 75 % en poids de zinc. On ajoute 10 parties environ d'une fritte de verre à base de borosilicate de plomb. La résistivité de la pâte conductrice est d'environ 52 µ Ω.cm.

L'objectif est ici encore d'obtenir un réseau chauffant d'environ 200 watts de puissance sous une tension électrique de 13 volts environ.

La lunette arrière finalement obtenue présente un facteur TL_{A} de 45 % environ et un facteur TE de 28 % environ.

En terme de chauffage, le réseau se montre performant.

Dans deux autres réalisations de vitrages selon l'invention, on utilise des compositions de pâtes conductrices A et B comprenant les composants suivants et en quantités exprimées en parties en poids :

| | A | B |
|---|---|---|
| argent | 15 | 20 |
| oxyde de ruthénium (RuO₂) | 4 | 2 |
| Pigment (CuCr₂O₄) | 3 | 26 |
| fritte à base de PbO | 78 | 52 |

Les résistivités des pâtes sont respectivement 70 µΩ.cm et 140 µΩ.cm.

Lorsque le vitrage selon l'invention est utilisé en tant que vitrage latéral arrière non chauffant, il peut être fabriqué par la méthode décrite précédemment avec bien entendu dispense du dépôt des bandes collectrices par sérigraphie.

Dans son application en tant que lunette arrière, le vitrage selon l'invention, outre les avantages indiqués précédemment, limite l'éblouissement dû notamment aux phares des véhicules en circulation de nuit.

## Revendications

1. Vitrage pour véhicule automobile, en particulier lunette arrière ou vitrage latéral, caractérisé en ce qu'il comprend une feuille de verre revêtue sur sa face destinée à être orientée vers l'habitacle d'un réseau à base d'une composition de type émail, opaque ou essentiellement opaque, de faible émissivité et/ou conducteur de l'électricité, ce réseau s'étendant sur essentiellement toute la surface de la feuille de verre correspondant au champ de vision, avec un taux de recouvrement par la composition de type émail compris entre 20 et 90 %, et de préférence entre 25 et 80 % de la surface sur laquelle s'étend le réseau.

2. Vitrage selon la revendication 1, caractérisé en ce que la composition de type émail comprend au moins un composant procurant une couche de faible émissivité choisi parmi au moins un oxyde métallique et/ou un métal et/ou un mélange d'oxyde et de métal, d'émissivité plus faible que l'émissivité du verre.

3. Vitrage selon la revendication 2, caractérisé en ce que l'émissivité de la composition est inférieure à 0,6.

4. Vitrage selon une des revendications 1 à 3, caractérisé en ce que la composition comprend au moins un mital bon conducteur de l'électricité.

5. Vitrage selon la revendication 4, caractérisé en ce que la composition comprend de l'argent.

6. Vitrage selon une des revendications 4 à 5, caractérisé en ce que la composition comprend de manière essentielle au moins une pâte d'argent ou au moins un mélange d'une pâte d'argent et d'une pâte d'un autre métal moins bon conducteur de l'électricité.

7. Vitrage selon une des revendications 1 à 6, caractérisé en ce que la composition comprend en outre une fritte de verre.

8. Vitrage selon une des revendications 1 à 7, caractérisé en ce que la composition comprend en outre au moins un pigment.

9. Vitrage selon une des revendications 1 à 8, caractérisé en ce que le réseau est à motif de répétition continu.

10. Vitrage selon une des revendications 4 à 9, caractérisé en ce que le réseau est un réseau chauffant associé à deux bandes collectrices.

11. Vitrage selon une des revendications 4 à 10, caractérisé en ce que la largeur des espaces couverts par la composition est supérieure à 0,5 mm en moyenne.

12. Vitrage selon une des revendications 10 ou 11, caractérisé en ce que le réseau présente des modulations de manière à privilégier certaines zones de chauffage.

13. Vitrage selon une des revendications 1 à 12, caractérisé en ce que le rapport TL_{A}/TE est supérieur à 1.

14. Vitrage selon une des revendications 1 à 13, caractérisé en ce que la feuille de verre est un verre teinté ayant une fonctionnalité anti-solaire.

15. Vitrage selon une des revendications 1 à 14, caractérisé en ce que la feuille de verre est associée à au moins une autre feuille et/ou couche de verre ou de matière plastique.

## Patentansprüche

1. Autoverglasung, insbesondere Heck- oder Seitenscheibe, **dadurch gekennzeichnet, daß** sie eine Glasscheibe umfaßt, welche auf der Seite, die vorgesehen ist, zur Fahrgastzelle zu zeigen, mit einem Netz auf der Basis einer opaken oder im wesentlichen opaken Zusammensetzung vom Typ Email mit niedrigem Emissionsvermögen und/oder elektrischer Leitfähigkeit beschichtet ist, welches sich im wesentlichen über die gesamte Oberfläche der Glasscheibe erstreckt, die dem Gesichtsfeld entspricht, wobei der Grad der Bedeckung durch die Zusammensetzung vom Typ Email 20 bis 90 % und vorzugsweise zwischen 25 und 80 % der Oberfläche beträgt, über welche sich das Netz erstreckt.

2. Verglasung nach Anspruch 1, **dadurch gekennzeichnet, daß** die Zusammensetzung vom Typ Email wenigstens einen Bestandteil enthält, welcher eine Schicht mit niedrigem Emissionsvermögen liefert und aus mindestens einem Metalloxid und/oder einem Metall und/oder einem Gemisch aus Oxid und Metall mit einem niedrigeren Emissionsvermögen als dem von Glas ausgewählt ist.

3. Verglasung nach Anspruch 2, **dadurch gekennzeichnet, daß** der Emissionskoeffizient der Zusammensetzung kleiner als 0,6 ist.

4. Verglasung nach einem der Ansprüche 1 bis 3, **dadurch gekennzeichnet, daß** die Zusammensetzung mindestens ein Metall enthält, das den elektrischen Strom gut leitet.

5. Verglasung nach Anspruch 4, **dadurch gekennzeichnet, daß** die Zusammensetzung silberhaltig ist.

6. Verglasung nach Anspruch 4 oder 5, **dadurch gekennzeichnet, daß** die Zusammensetzung im wesentlichen mindestens eine Silberpaste oder mindestens ein Gemisch aus einer Silberpaste und einer Paste aus einem anderen Metall, das den elektrischen Strom weniger gut leitet, enthält.

7. Verglasung nach einem der Ansprüche 1 bis 6, **dadurch gekennzeichnet, daß** die Zusammensetzung außerdem eine Glasfritte enthält.

8. Verglasung nach einem der Ansprüche 1 bis 7, **dadurch gekennzeichnet, daß** die Zusammensetzung weiterhin mindestens ein Pigment enthält.

9. Verglasung nach einem der Ansprüche 1 bis 8, **dadurch gekennzeichnet, daß** das Netz aus einem Muster besteht, das sich ständig wiederholt.

10. Verglasung nach einem der Ansprüche 4 bis 9, **dadurch gekennzeichnet, daß** das Netz ein an zwei Sammelbänder angeschlossenes Beheizungsnetz ist.

11. Verglasung nach einem der Ansprüche 4 bis 10, **dadurch gekennzeichnet, daß** die Breite der Abstände, die von der Zusammensetzung bedeckt werden, im Mittel mehr als 0,5 mm beträgt.

12. Verglasung nach Anspruch 10 oder 11, **dadurch gekennzeichnet, daß** das Netz derart Variationen aufweist, daß bestimmte Beheizungszonen bevorzugt werden.

13. Verglasung nach einem der Ansprüche 1 bis 12, **dadurch gekennzeichnet, daß** das Verhältnis von T_{LA}/T_{E} größer als 1 ist.

14. Verglasung nach einem der Ansprüche 1 bis 13, **dadurch gekennzeichnet, daß** die Glasscheibe aus einem getönten Glas mit Sonnenschutzfunktion besteht.

15. Verglasung nach einem der Ansprüche 1 bis 14, **dadurch gekennzeichnet, daß** die Glasscheibe mit mindestens einer weiteren Glasscheibe und/oder Schicht aus Glas bzw. Kunststoff verbunden ist.

## Claims

1. Glazing for car, particularly rear or side window, characterized in that it comprises a glass sheet coated on its face to be oriented towards the passenger compartment with a network based on an enamel-type composition, which is opaque or essentially opaque, has a low emissivity and/or conducts electricity, said network extending essentially over the entire surface of the glass sheet corresponding to the field of vision, with a coverage level of the enamel-type composition between 20 and 90% and preferably between 25 and 80% of the surface over which the network extends.

2. Glazing according to claim 1, characterized in that the enamel-type composition comprises at least one component giving a low emissivity layer and chosen from among at least one metal oxide and/or a metal and/or a mixture of oxide and metal having a lower emissivity than that of the glass.

3. Glazing according to claim 2, characterized in that the emissivity of the composition is below 0.6.

4. Glazing according to one of the claims 1 to 3, characterized in that the composition comprises at least one good electricity-conducting metal.

5. Glazing according to claim 4, characterized in that the composition comprises silver.

6. Glazing according to one of the claims 4 and 5, characterized in that the composition essentially comprises at least one silver paste or at least one mixture of a silver paste and a paste of another metal which is a less good conductor of electricity.

7. Glazing according to one of the claims 1 to 6, characterized in that the composition also comprises a glass frit.

8. Glazing according to one of the claims 1 to 7, characterized in that the composition also comprises at least one pigment.

9. Glazing according to one of the claims 1 to 8, characterized in that the network has a continuous repetition pattern.

10. Glazing according to one of the claims 4 to 9, characterized in that the network is a heated network associated with two collecting strips.

11. Glazing according to one of the claims 4 to 10, characterized in that the width of the spaces covered by the composition on average exceed 0.5 mm.

12. Glazing according to one of the claims 10 or 11, characterized in that the network has modulations so as to give preference to certain heating areas.

13. Glazing according to one of the claims 1 to 12, characterized in that the TL_{A}/TE ratio exceeds 1.

14. Glazing according to one of the claims 1 to 13, characterized in that the glass sheet is a tinted glass having a sun shielding function.

15. Glazing according to one of the claims 1 to 14, characterized in that the glass sheet is combined with at least one other glass or plastic material sheet and/or layer.
